# EUROPEAN PATENT SPECIFICATION

(11) **EP 3 044 439 B1**
(45) Date of publication and mention of the grant of the patent: **23.12.2020**
(21) Application number: 14843869.0
(22) Date of filing: 05.08.2014
(51) Int. Cl.: F02C 7/12, F02C 7/18, F23R 3/42

(54) **EDGE COOLING FOR COMBUSTOR PANELS**
KANTENKÜHLUNG FÜR BRENNKAMMERPLATTEN
REFROIDISSEMENT DES BORDS POUR DES PANNEAUX DE CHAMBRE DE COMBUSTION

(30) Priority: 10.09.2013 US 201361875850 P
(43) Date of publication of application: 20.07.2016
(73) Proprietor: United Technologies Corporation, Farmington, CT 06032 (US)
(72) Inventor: TU, John S., West Hartford, Connecticut 06107 (US); BANGERTER, James P., East Hartford, Connecticut 06108 (US); SZE, Robert, Mississauga, Ontario L5R 1V1 (CA); HOKE, James B., Tolland, Connecticut 06084 (US); PACHECO-TOUGAS, Monica, Waltham, Massachusetts 02453 (US)
(74) Representative: Dehns
(86) International application number: PCT/US2014/049686
(87) International publication number: WO 2015/038256

(56) References cited:
- EP-A1- 2 562 358
- WO-A2-2014/197045
- FR-A1- 2 635 577
- US-A- 4 315 406
- US-A- 5 396 759
- US-A- 5 396 759
- US-A- 6 029 455
- US-A1- 2003 213 250
- US-A1- 2008 264 064
- US-A1- 2008 264 065
- US-A1- 2011 126 543
- US-B2- 8 056 342

## Description

### CROSS-REFERENCE TO RELATED APPLICATION

This application claims priority to United States Provisional Application No. 61/875,850, filed September 10, 2013.

### BACKGROUND

This application relates to improved cooling techniques for combustor panels for use in a gas turbine engine.

Gas turbine engines are known and, typically, include a compressor which compresses air and delivers it into a combustor. The air is mixed with fuel and ignited. Products of this combustion pass downstream over turbine rotors driving them to rotate.

The combustor sees very high temperatures due to the combustion. As such, efforts are made to assist the combustor in surviving these high temperatures.

To assist in protecting combustors, heat resistant panels are placed along an outer shell. The heat resistant panels are provided with cooling air openings. In particular, the outer shell may be spaced from an inner panel which faces the products of combustion. Holes extend through the outer shell and impinge on an outer face of the inner panel and then move through other holes in the inner panel to provide film cooling to an inner face of the inner panel.

In the prior art, the holes are generally spaced uniformly about the inner panel.

A combustor according to the preamble of claim 1 is described by EP1363075.

### SUMMARY

A combustor for use in a gas turbine engine is described in claim 1.

The edge may be an outer surface of a boss around a circumference of one of the dilution or an ignitor hole.

The rail is provided about an outer face of the panel, and the edge may be measured from a wall of the rail facing into the panel.

The edge may be a leading edge of the panel.

The edge may be a trailing edge of the panel.

The edge may be circumferential edges of the panel.

At least at the circumferential edges, the first cooling holes may extend from the outer face of the panel to an outlet at the inner face at a location aligned with the rail at the circumferential edges.

[deleted]

At least one of the second cooling holes and the first cooling holes may be the second cooling holes.

At least one of the second cooling holes and the first cooling holes may be both the second cooling holes and the first cooling holes.

The reduced spacing area may also have a greater density of cooling hole area than a nominal average density of cooling hole area.

A spacing between adjacent ones of at least one of the second impingement cooling holes and the first cooling holes in the reduced spacing area may be equal to or less than ten (10) average diameter of the first cooling holes.

The term adjacent is defined by being spaced by a distance from at least one edge equal to or less than ten (10) average diameter of the at least one of the second cooling holes and the first cooling holes.

The first cooling holes are effusion cooling hole and the second cooling holes are impingement cooling holes.

The reduced spacing area may be between the first cooling holes and at both circumferential edges, one of a leading and a trailing edge of the panel, and at a circumference of a dilution or ignitor hole.

[deleted]

An outer face of the panel has a rail, at least at the circumferential edges, and the effusion cooling holes extends from the outer face of the panel to an outlet at the inner face at a location aligned with the rail at the circumferential edges.

The impingement cooling hole may also have an increased density area adjacent to the at least one edge.

[deleted]

The increased density area may be found at both circumferential edges, one of a leading and a trailing edge of the panel, and at a circumference of a dilution or ignitor hole.

[deleted]

These and other features may be best understood from the following drawings and specification.

### BRIEF DESCRIPTION OF THE DRAWINGS

Figure 1 shows a gas turbine engine.
Figure 2 shows a combustor.
Figure 3 shows a panel within a combustor.
Figure 4A shows a first feature.
Figure 4B shows a reverse side of the Figure 4A panel.
Figure 4C shows a portion of an outer shell.
Figure 4D shows another feature.
Figure 4E shows another feature.
Figure 4F shows a detail of the features.

### DETAILED DESCRIPTION

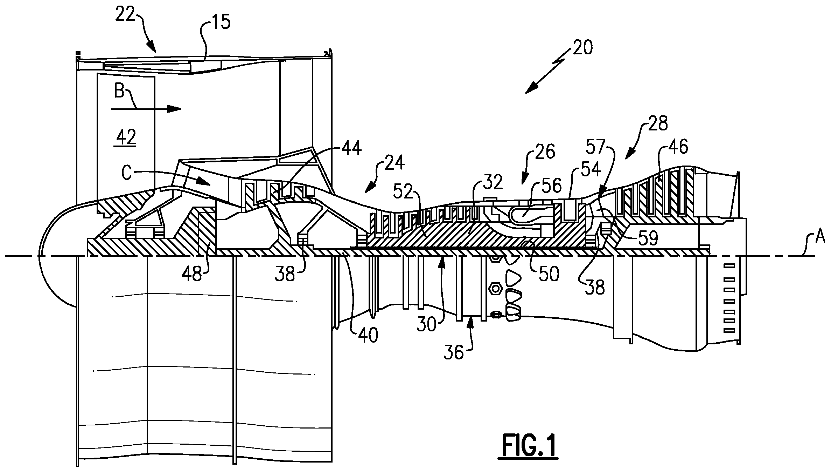

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 11670 meters (35000 feet). The flight condition of 0.8 Mach and 11670 meters (35000 feet), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 383m (1150ft) / second.

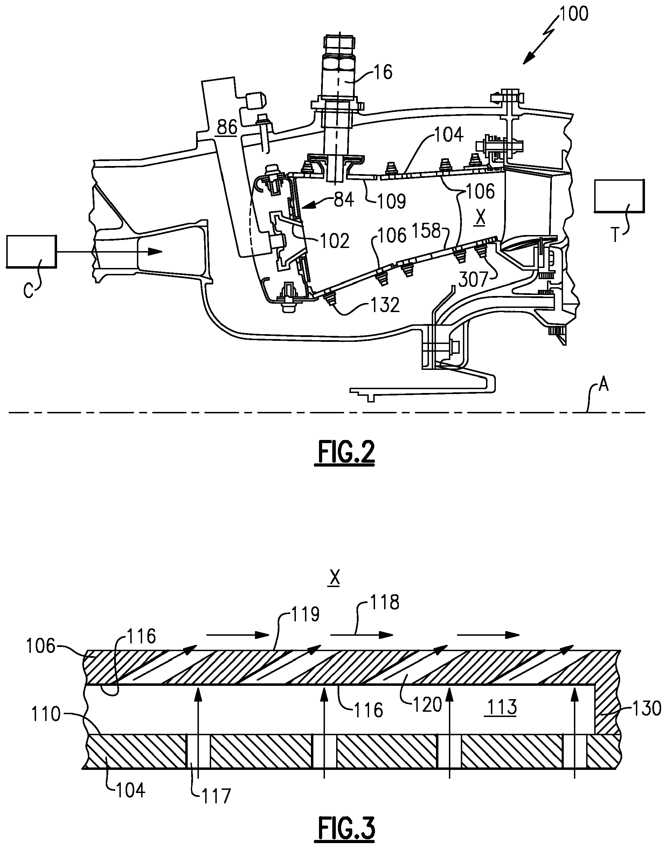

Figure 2 shows a combustor 100 incorporating a swirler 102 which mixes air and fuel from an injector 86, such that they can be ignited by igniter 16. An outer shell 104 is secured to inner panels 106 by studs 132. The outer shell 104 surrounds a combustor chamber X. Dilution holes 158 may extend through the panel 106 and outer shell 104 and provide cooling air to an inner surface. Studs 132 secure the panels 106 to the outer shell 104.

Figure 3 shows the outer shell 104 having an inner surface 110 spaced from an outer face or surface 116 of the panel 106. The term "outer" should be interpreted as facing away from the chamber X, while "inner" means facing the chamber X.

A plurality of impingement cooling holes 117 provide impingement air flow into a chamber 113 defined between the surfaces 110 and 116.

A plurality of effusion cooling holes 120 extend at an angle which is non-perpendicular, and non-parallel, to the surface 116 and provide film cooling to an inner face 119 of the panel 106. The film cooling air 118 passing along face 119 assists the panel 106 in surviving the hot temperatures.

Applicant has recognized that the cooling load along the faces 110 and 119 is not uniform across the entirety of the outer shell 104 and inner panel 106.

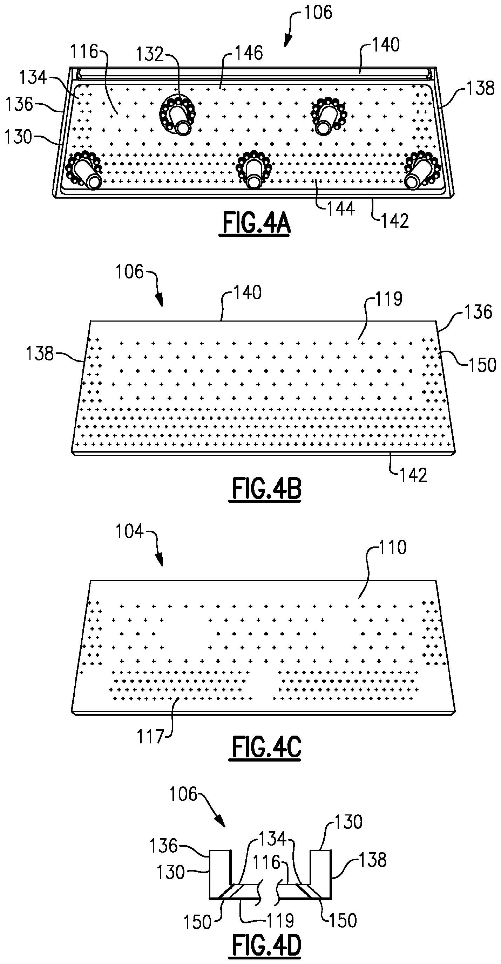

As shown in Figure 4A, the panel 106 has circumferential side edges 136 and 138. As shown, there is a greater number of cooling holes 144 at leading edge 142 than there are holes 146 adjacent the trailing edge 140. Similarly, there are a greater number of holes 134 adjacent the circumferential edges 136 and 138 than are nominally found centrally between the edges. Applicant has found that the cooling load along the edges is greater than the cooling load adjacent the center portion of the panel 106 or at the downstream edge 140. The cooling holes shown in Figure 4A correspond to an upstream end of holes 120 of Figure 3.

The leading edge 142 would preferably have the greater density on an aft panel. There are also forward panels, where the greater cooling load may be at the trailing edge. For purposes of this application, the greater density could be at either, depending on the ultimate use of the panel. Thus, in an alternative to Figure 4A, the edge 142 may be a trailing edge. Of course, there may be structural or shape differences between the panels used at those two locations.

As will be explained below, the "edge" will be measured from a wall of the rail facing a central portion of the panel 106.

As shown in Figure 4A, there is also a rail 130 that surrounds the circumference of the panel 106. As can be appreciated from Figure 3, the rail 130 contacts the surface 110 of the outer shell 104.

As shown in Figure 4B, there are outlets 150 associated with holes 134 adjacent the edges 136 and 138, and which exit at a location underneath the location of the rail 130. That is, the outlets 150 are aligned with the location of the rails 130 at the edges of the panel 106.

Figure 4C shows a portion of the outer shell 104. The inner face 110 would have a plurality of impingement cooling holes 117, and would have the higher density and closer spacing which tracks that of the panel 106. That is, the higher density and closer spacing would be adjacent at least one edge.

Figure 4D shows details of the holes 134. As shown, an inlet to the holes 134 on the outer face 116 extends at an angle that is non-perpendicular and non-parallel to the face 116, and each extend generally outwardly toward their respective edges 136 and 138 such that the outlet 150 is aligned with the location of the rails 130. The holes 134 extend at the edge 136 and 138, at each of the circumferential directions such that outlets 150 are is spaced closer to each of the circumferential edges than is an inlet to the effusion cooling holes 134.

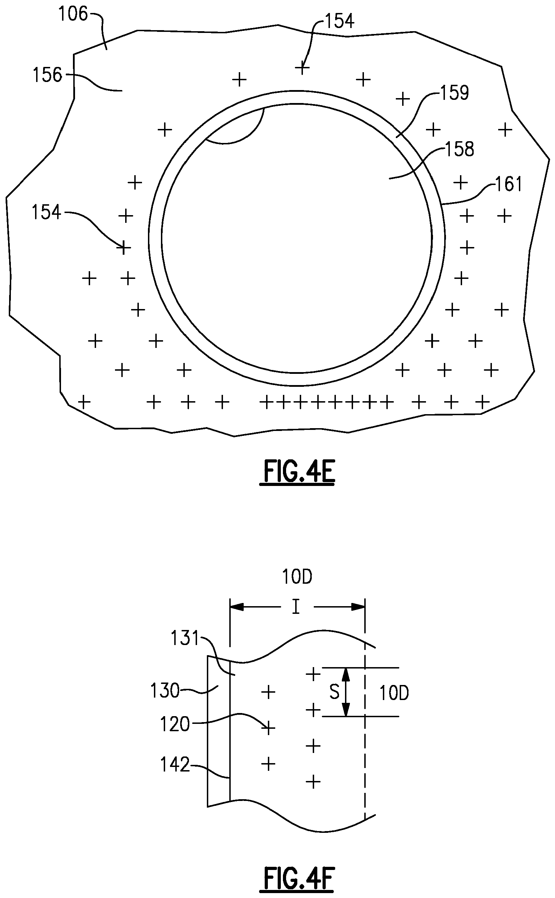

Figure 4E shows a dilution hole, such as holes 158 as shown in Figure 2. Applicant has also recognized that the edges of dilution holes 158 carry a higher cooling load than do more remote portions of the central area of the panel 106. Thus, there is a greater number of effusion cooling holes 154 adjacent the edge of the bore forming the hole 158 than at more spaced locations, say location 156. While this feature is illustrated about dilution hole 158, an ignitor, such as ignitor 16 may be surrounded by a hole. Thus, in another embodiment, hole 134 surrounds an ignitor 16. Such holes are generally much larger than effusion cooling holes 120.

A boss 159 is shown surrounding the circumference of the hole 158. A peripheral surface 161 becomes the measuring point for the "edge" as defined within this application.

In general, this application discloses a greater volume or density of holes adjacent at least one of the edges of the panel, with the edges being either the leading or trailing edge, one of the side edges or the circumference of a hole, such as a hole for dilution cooling or surrounding an ignitor.

The greater density is defined with regard to the density of the other effusion cooling holes at locations spaced away from the edge. For purposes of this application, the holes 120 have an average diameter and the term "adjacent" the edge is less than or equal to ten (10) average diameters from the edge.

Stated another way, an average density of an area of the holes 120 across the entire surface area of a panel 106 may be defined and there is greater density area adjacent at least one of edges 136, 138 and 142 or along the circumference of the holes 158. One could say that there is a nominal average density of a effusion cooling hole area for the entire surface area of the panel, and there is an increased or greater density area of cooling hole area adjacent to at least one of the edges. In embodiments, the greater density may be at more than one edge, and may be at all of the edges.

In embodiments, a ratio of the cooling hole area per unit of area at said greater density area to the nominal average density of cooling hole area is between 1.25 and 2.0.

Figure 4F shows the edge 142 and the density of holes 120 within a distance I equal to 10D (the D representing an average diameter of the dilution holes) from the edge 142. As shown, the rail 130 has the wall 131 facing a central portion of the panel. It is this wall 131 which defines the "edge" for purposes of the measurement of this application. In addition, there is a closer or reduced spacing S between the cooling holes 120 in the greater density area. Thus, the greater density area is also a reduced spacing area. The spacing S between adjacent cooling holes is preferably less than 10D. It should be understood that the holes 120 need not be cylindrical, and thus the average diameter D should be interpreted as being the average hydraulic diameter.

The wall 131 and the peripheral surface 161 would also be used to define the location of the "edge" for the reduced spacing and higher density areas of the impingement cooling holes 120 on the outer shell.

Although an embodiment of this invention has been disclosed, a worker of ordinary skill in this art would recognize that certain modifications would come within the scope of this disclosure. For that reason, the following claims should be studied to determine the true scope and content of this disclosure.

## Claims

1. A combustor (26) for a gas turbine engine comprising:
a panel (106) with effusion cooling holes (120) extending through said panel (106), said effusion cooling holes communicating with an inner face of said panel (106) to deliver cooling air to said inner face of said panel, and an outer shell (104) attached to said panel (106), said outer shell (104) having impingement cooling holes (117) extending to deliver air to a chamber between said outer shell (104) and said panel, and then into said effusion cooling holes; said panel having a pair of circumferential edges, a leading edge and a trailing edge; and
there being a nominal average density of effusion cooling hole area per surface area of said panel, and an increased density area of cooling holes adjacent to at least one edge on said panel, said increased density area having a density greater of cooling hole area than said nominal average density, and **characterized by** an outer face of said panel having a rail, at least at its circumferential edges, and said effusion cooling holes of said increased density area extending from said outer face of said panel to an outlet at said inner face at a location aligned with said rail at said circumferential edges, with said outlets of said effusion cooling holes being spaced closer to said circumferential edges of said panel than said inlets; wherein the term adjacent is defined by being spaced by a distance from said at least one edge equal to or less than ten average diameters of said effusion holes.

2. The combustor as set forth in claim 1, wherein said impingement cooling hole (117) also having an increased density area adjacent to said at least one edge, and/or wherein said increased density area being found at both circumferential edges, one of a leading (142) and a trailing edge (140) of said panel (106), and at a circumference of a dilution or ignitor hole.

3. The combustor (100) of claim 1 wherein said rail extends to contact said outer shell.

4. The combustor (100) of claim 1
there being a nominal average spacing of at least one of said impingement holes (117) and said effusion cooling holes (120) per an entire surface area of said outer shell (104) or said panel (106) respectively, and a reduced spacing area of said at least one of said impingement cooling holes (117) and said effusion cooling holes (120) adjacent to at least one edge on said panel, and said at least one of said impingement cooling holes (117) and said effusion cooling holes (120) in said reduced spacing area being spaced by a distance less than said nominal average spacing.

5. The combustor as set forth in claim 4, wherein said edge being an outer surface of a boss around a circumference of one of the dilution or an ignitor hole.

6. The combustor as set forth in claim 4 or 5, wherein said rail is provided about an outer face of said panel, and the distance to the edge is measured from a wall of the rail facing into the panel.

7. The combustor as set forth in claim 6, wherein said edge being a leading edge (142) of said panel, or wherein said edge being a trailing edge (140) of said panel, or wherein said edge being circumferential edges (136, 138) of said panel.

8. The combustor as set forth in claim 6, wherein said edge being circumferential edges of said panel and wherein at least at said circumferential edges (136, 138), said cooling holes extending from said outer face of said panel (106) to an outlet at said inner face at a location aligned with said rail at said circumferential edges.

9. The combustor as set forth in claim 8, wherein said effusion cooling holes (120) extend in opposed angular directions that are non-perpendicular and non-parallel to said outer face, such that said outlets are spaced closer to each of said circumferential edges than are inlets to said effusion cooling holes (120).

10. The combustor as set forth in claim 4, wherein said at least one of said impingement cooling holes (117) and said effusion cooling holes is said impingement cooling holes (117).

11. The combustor as set forth in claim 10, wherein said at least one of said impingement cooling holes (117) and said effusion cooling holes (120) is both said impingement cooling holes (117) and said effusion cooling holes (120).

12. The combustor as set forth in claim 4, 10, or 11, wherein said reduced spacing area also having a greater density of cooling hole area than a nominal average density of cooling hole area.

13. The combustor as set forth in claim 4, 10, 11, or 12, wherein a spacing between adjacent ones of said at least one of said impingement cooling holes (117) and said effusion cooling holes (120) in said reduced spacing area being equal to or less than ten (10) average diameter of said first cooling holes.

14. The combustor as set forth in claim 4, or 10 to 13, wherein the term adjacent is defined by being spaced by a distance from said at least one edge equal to or less than ten (10) average diameter of said at least one of said impingement cooling holes (117) and said effusion cooling holes (120).

15. The combustor as set forth in any of claims 4, or 10 to 14, wherein said reduced spacing area being between said effusion cooling holes (120), and at both circumferential edges, one of a leading (142) and a trailing edge (140) of said panel (106), and at a circumference of a dilution or ignitor hole.

## Patentansprüche

1. Brennkammer (26) für ein Gasturbinentriebwerk, umfassend:
eine Platte (106) mit Effusionskühllöchern (120), die sich durch die Platte (106) erstrecken, wobei die Effusionskühllöcher mit einer Innenseite der Platte (106) kommunizieren, um der Innenseite der Platte Kühlluft zuzuführen, und eine Außenhülle (104), die an der Platte (106) befestigt ist, wobei die Außenhülle (104) Prallkühllöcher (117) aufweist, die sich erstrecken, um einer Kammer zwischen der Außenhülle (104) und der Platte Luft zuzuführen, und danach in die Effusionskühllöcher; wobei die Platte ein Paar Umfangskanten, eine Vorderkante und eine Hinterkante aufweist; und
wobei eine nominelle mittlere Dichte von Effusionskühllochfläche pro Oberfläche der Platte und eine erhöhte Dichtfläche von Kühllöchern angrenzend an mindestens eine Kante an der Platte vorhanden sind, wobei die erhöhte Dichtfläche eine größere Dichte von der Kühllochfläche als die nominelle mittlere Dichte aufweist, und **gekennzeichnet durch** eine Außenseite der Platte, die eine Schiene mindestens bei ihren Umfangskanten aufweist, und wobei sich die Effusionskühllöcher der erhöhten Dichtfläche von der Außenseite der Platte zu einem Ausgang bei der Innenseite an einer Stelle erstrecken, die mit der Schiene an den Umfangskanten ausgerichtet ist, wobei die Ausgänge der Effusionskühllöcher enger an den Umfangskanten der Platte beabstandet sind als die Eingänge; wobei der Begriff angrenzend durch die Beabstandung durch eine Entfernung von der mindestens einen Kante gleich oder kleiner als zehn mittlere Durchmesser der Effusionslöcher definiert ist.

2. Brennkammer nach Anspruch 1, wobei das Prallkühlloch (117) auch eine erhöhte Dichtfläche angrenzend an die mindestens eine Kante aufweist, und/oder wobei die erhöhte Dichtfläche sowohl an Umfangskanten, eine von einer Vorder- (142) und einer Hinterkante (140) der Platte (106), als auch an einem Umfang eines Verdünnungs- oder Zündlochs gefunden wird.

3. Brennkammer (100) nach Anspruch 1, wobei sich die Schiene erstreckt, um die Außenhülle zu kontaktieren.

4. Brennkammer (100) nach Anspruch 1,
wobei ein nomineller mittlerer Abstand von mindestens einem der Pralllöcher (117) und der Effusionskühllöcher (120) pro einer ganzen Oberfläche der Außenhülle (104) beziehungsweise der Platte (106) und eine reduzierte Abstandsfläche des mindestens einen der Prallkühllöcher (117) und der Effusionskühllöcher (120) angrenzend an mindestens eine Kante auf der Platte vorhanden sind, und wobei mindestens eines der Prallkühllöcher (117) und der Effusionskühllöcher (120) in der reduzierten Abstandsfläche durch eine Entfernung, die kleiner als der nominelle mittlere Abstand ist, beabstandet ist.

5. Brennkammer nach Anspruch 4, wobei die Kante eine Außenfläche von einer Nabe um einen Umfang von einem des Verdünnungs- oder eines Zündlochs ist.

6. Brennkammer nach Anspruch 4 oder 5, wobei die Schiene um eine Außenseite der Platte bereitgestellt ist und die Entfernung zur Kante von einer Wand der Schiene, die der Platte zugewandt ist, gemessen wird.

7. Brennkammer nach Anspruch 6, wobei die Kante eine Vorderkante (142) der Platte ist, oder wobei die Kante eine Hinterkante (140) der Platte ist, oder wobei die Kante Umfangskanten (136, 138) der Platte ist.

8. Brennkammer nach Anspruch 6, wobei die Kante Umfangskanten der Platte ist und wobei sich die Kühllöcher mindestens an den Umfangskanten (136, 138) von der Außenseite der Platte (106) zu einem Ausgang auf der Innenseite an einer Stelle erstrecken, die mit der Schiene an den Umfangskanten ausgerichtet ist.

9. Brennkammer nach Anspruch 8, wobei sich die Effusionskühllöcher (120) derart in gegenüberliegenden Winkelrichtungen, die nicht senkrecht und nicht parallel sind, zur Außenseite erstrecken, dass die Ausgänge enger zu jeder der Umfangskanten als Eingänge zu den Effusionskühllöchern (120) beabstandet sind.

10. Brennkammer nach Anspruch 4, wobei das mindestens eine der Prallkühllöcher (117) und der Effusionskühllöcher die Prallkühllöcher (117) ist.

11. Brennkammer nach Anspruch 10, wobei das mindestens eine der Prallkühllöcher (117) und der Effusionskühllöcher (120) sowohl die Prallkühllöcher (117) als auch die Effusionskühllöcher (120) ist.

12. Brennkammer nach Anspruch 4, 10 oder 11, wobei die reduzierte Abstandsfläche auch eine größere Dichte der Kühllochfläche als eine nominelle mittlere Dichte von der Kühllochfläche aufweist.

13. Brennkammer nach Anspruch 4, 10, 11 oder 12, wobei ein Abstand zwischen angrenzenden des mindestens einen der Prallkühllöcher (117) und der Effusionskühllöcher (120) in der reduzierten Abstandsfläche gleich oder kleiner als zehn (10) mittlere Durchmesser der ersten Kühllöcher ist.

14. Brennkammer nach Anspruch 4 oder 10 bis 13, wobei der Begriff angrenzend durch die Beabstandung durch eine Entfernung von der mindestens einen Kante gleich oder kleiner als zehn (10) mittlere Durchmesser des mindestens einen der Prallkühllöcher (117) und der Effusionskühllöcher (120) definiert ist.

15. Brennkammer nach Anspruch 4 oder 10 bis 14, wobei die reduzierte Abstandsfläche zwischen den Effusionskühllöchern (120) und sowohl an den Umfangskanten, eine von einer Vorder-(142) und einer Hinterkante (140) der Platte (106), als auch an einem Umfang eines Verdünnungs- oder Zündlochs ist.

## Revendications

1. Chambre de combustion (26) pour moteur à turbine à gaz, comprenant :
un panneau (106) avec des trous de refroidissement par effusion (120) s'étendant à travers ledit panneau (106), lesdits trous de refroidissement par effusion communiquant avec une face intérieure dudit panneau (106) pour fournir de l'air de refroidissement à ladite face intérieure dudit panneau, et une coque extérieure (104) fixée audit panneau (106), ladite coque extérieure (104) ayant des trous de refroidissement par impact (117) s'étendant pour fournir de l'air à une chambre entre ladite coque extérieure (104) et ledit panneau, et puis dans lesdits trous de refroidissement par effusion ; ledit panneau ayant une paire de bords circonférentiels, un bord d'attaque et un bord de fuite ; et
avec une densité moyenne nominale de surface de trou de refroidissement par effusion par surface dudit panneau, et une surface de densité accrue de trous de refroidissement adjacente à au moins un bord sur ledit panneau, ladite surface de densité accrue ayant une densité de la surface de trou de refroidissement supérieure à ladite densité moyenne nominale, et **caractérisée par** une face extérieure dudit panneau ayant un rail, au moins à ses bords circonférentiels, et lesdits trous de refroidissement par effusion de ladite surface de densité accrue s'étendant de ladite face extérieure dudit panneau à une sortie sur ladite face intérieure en un emplacement aligné avec ledit rail au niveau desdits bords circonférentiels, lesdites sorties desdits trous de refroidissement par effusion étant espacées plus près desdits bords circonférentiels dudit panneau que lesdites entrées ; dans lequel le terme adjacent est défini par un espacement à raison d'une distance à partir dudit au moins un bord égale ou inférieure à dix diamètres moyens desdits trous d'effusion.

2. Chambre de combustion selon la revendication 1, dans laquelle ledit trou de refroidissement par impact (117) a également une surface de densité accrue adjacente audit au moins un bord, et/ou dans laquelle ladite surface de densité accrue se trouve au niveau des deux bords circonférentiels, l'un d'un bord d'attaque (142) et d'un bord de fuite (140) dudit panneau (106), et à une circonférence d'un trou de dilution ou d'allumage.

3. Chambre de combustion (100) selon la revendication 1, dans laquelle ledit rail s'étend pour entrer en contact avec ladite coque extérieure.

4. Chambre de combustion (100) selon la revendication 1 avec un espacement moyen nominal d'au moins l'un desdits trous par impact (117) et desdits trous de refroidissement par effusion (120) par une surface entière de ladite coque extérieure (104) ou dudit panneau (106) respectivement, et une surface d'espacement réduite dudit au moins un desdits trous de refroidissement par impact (117) et desdits trous de refroidissement par effusion (120) adjacente à au moins un bord sur ledit panneau, et ledit au moins un desdits trous de refroidissement par impact (117) et desdits trous de refroidissement par effusion (120) dans ladite surface d'espacement réduite étant espacé à raison d'une distance inférieure audit espacement moyen nominal.

5. Chambre de combustion selon la revendication 4, dans laquelle ledit bord est une surface extérieure d'un bossage autour d'une circonférence de l'un du trou de dilution ou d'allumage.

6. Chambre de combustion selon la revendication 4 ou 5, dans laquelle ledit rail est prévu autour d'une face extérieure dudit panneau, et la distance par rapport au bord est mesurée à partir d'une paroi du rail faisant face au panneau.

7. Chambre de combustion selon la revendication 6, dans laquelle ledit bord est un bord d'attaque (142) dudit panneau, ou dans laquelle ledit bord est un bord de fuite (140) dudit panneau, ou dans laquelle ledit bord consiste en des bords circonférentiels (136, 138) dudit panneau.

8. Chambre de combustion selon la revendication 6, dans laquelle ledit bord consiste en des bords circonférentiels dudit panneau et dans laquelle, au moins au niveau desdits bords circonférentiels (136, 138), lesdits trous de refroidissement s'étendent de ladite face extérieure dudit panneau (106) à une sortie au niveau de ladite face intérieure en un emplacement aligné avec ledit rail au niveau desdits bords circonférentiels.

9. Chambre de combustion selon la revendication 8, dans laquelle lesdits trous de refroidissement par effusion (120) s'étendent dans des directions angulaires opposées qui sont non perpendiculaires et non parallèles à ladite face extérieure, de sorte que lesdites sorties sont espacées plus près de chacun desdits bords circonférentiels que le sont les entrées dans lesdits trous de refroidissement par effusion (120).

10. Chambre de combustion selon la revendication 4, dans laquelle ledit au moins un desdits trous de refroidissement par impact (117) et desdits trous de refroidissement par effusion consiste dans lesdits trous de refroidissement par impact (117).

11. Chambre de combustion selon la revendication 10, dans laquelle ledit au moins un desdits trous de refroidissement par impact (117) et desdits trous de refroidissement par effusion (120) consiste à la fois dans lesdits trous de refroidissement par impact (117) et lesdits trous de refroidissement par effusion (120).

12. Chambre de combustion selon la revendication 4, 10 ou 11, dans laquelle ladite surface d'espacement réduite a également une densité de surface de trou de refroidissement supérieure à une densité moyenne nominale de surface de trou de refroidissement.

13. Chambre de combustion selon la revendication 4, 10, 11 ou 12, dans laquelle un espacement entre des trous adjacents dudit au moins un desdits trous de refroidissement par impact (117) et desdits trous de refroidissement par effusion (120) dans ladite surface d'espacement réduite est égal ou inférieur à e dix (10) diamètres moyens desdits premiers trous de refroidissement.

14. Chambre de combustion selon la revendication 4, ou 10 à 13, dans laquelle le terme adjacent est défini par un espacement à raison d'une distance dudit au moins un bord égal ou inférieur à dix (10) diamètres moyens dudit au moins un desdits trous de refroidissement par impact (117) et desdits trous de refroidissement par effusion (120).

15. Chambre de combustion selon l'une quelconque des revendications 4, ou 10 à 14, dans laquelle ladite surface d'espacement réduite se trouve entre lesdits trous de refroidissement par effusion (120), et aux deux bords circonférentiels, l'un d'un bord d'attaque (142) et d'un bord de fuite (140) dudit panneau (106), et à la circonférence d'un trou de dilution ou d'allumage.
